# EUROPÄISCHE PATENTANMELDUNG

(11) **EP 1 591 214 A1**
(43) Veröffentlichungstag der Anmeldung: **02.11.2005**
(21) Anmeldenummer: 05008766.7
(22) Anmeldetag: 21.04.2005
(51) Int. Cl.: B27N 1/02, B27N 5/02, B29B 7/92, B29B 9/12, B01D 39/14

(54) **Kunststoffbeschichtete Naturstoffpartikel**

(30) Priorität: 21.04.2004 DE 102004020012
(71) Anmelder: Korte, Hans, Dr., 23966 Wismar (DE)
(72) Erfinder: Korte, Hans, Dr., 23966 Wismar (DE)
(74) Vertreter: Wenzel & Kalkoff

(57) **Zusammenfassung**

Die Erfindung betrifft ein Verfahren zur Herstellung mindestens abschnittsweise kunststoffbeschichteter Naturstoffpartikel, mit den Schritten Mischen und ggf. Mahlen von Naturstoffpartikeln mit Kunststoffpartikeln in einem Gasstrom und mindestens abschnittsweisen Beschichten der Naturstoffpartikel mit Kunststoff sowie kunststoffbeschichtete Naturstoffpartikel, insbesondere deren Verwendung als Filter.

## Beschreibung

Die Erfindung betrifft kunststoffbeschichtete Naturstoffpartikel, insbesondere Holz- oder Naturfaserpartikel, sowie ein Verfahren zur Herstellung dieser Naturstoffpartikel, ein Verfahren zur Herstellung eines Holz-Kunststoff-Formkörpers sowie einen Holz-Kunststoff-Formkörper.

Seit der Entwicklung von Kunststoffen, die im Extrusionsverfahren und Spritzguß verwendet werden, werden Füllstoffe als Zuschlagsstoffe eingesetzt. Häufige Zuschlagsstoffe sind Holz in Form von Holzmehl oder Holzspänen oder aufbereitete Naturfasern, wie z. B. Reisschalen, die seit Anfang der 1990er Jahre in Gewichtsanteilen von 50% bis 90% eingesetzt werden.

Diese sogenannten "Wood Plastic Composites (WPC)" finden vermehrt Anwendung in verschiedenen Bereichen der Industrie, insbesondere der Bauindustrie jedoch vermehrt auch in der Automobil- und Fahrzeugindustrie. Von besonderem Vorteil ist dabei die Tatsache, daß zu einem Großteil nachwachsende Rohstoffe verwendet werden und die Bauteile bei einem hohen Holzanteil nahezu vollständig recyclebar sind.

Da Holz und Naturfasern jedoch keine Thermoplasten sind, müssen sie für die Extrusion in geeigneter Weise vorbereitet werden. Zu diesen Vorbereitungen gehört eine Zerkleinerung zu Feinspänen, Fasern oder Partikeln, eine Sortierung nach Größenklassen und vor allem eine Trocknung, die je nach Weiterverarbeitungsverfahren eine Restfeuchtigkeit von maximal 15 bis zu maximal 1% erzielen muß. Von besonderer Bedeutung ist die Partikelgröße und Partikelform der eingesetzten Materialien für die gleichmäßige Dosierung, da für den Betrieb von Extrusionsanlagen ein gleichmäßiger Ausgangs-Rohstoff existentiell ist, um gleichförmige Produktqualität zu erhalten. Zu große Partikel, z.B. mit mehr als 20 mm Durchmesser können z.B. nicht von Extrudern mit einer Produktionskapazität von 250 - 500 kg/h eingezogen werden. Faserförmige Partikel neigen dagegen stark zur Brückenbildung und sind deshalb schlecht zu dosieren. Allgemein gilt, daß das zu dosierende Material möglichst frei fließen soll.

Die aktuellen Technologien um WPC herzustellen sind die Profilextrusion, der Spritzguss und die Plattenpresstechnik. Bei der Profilextrusion ist zu unterscheiden in Einstufen- und Zweistufenprozesse. Die erste Stufe des Zweistufenprosses dient der Erzeugung von WPC-Grundstoff. Dieses Material kann auch für den Spritzguss oder die Plattenpresstechnik eingesetzt werden.

Beim Einstufenprozess, auch Direktextrusion genannt, werden die Holz- oder die Naturfaserpartikel und das Kunststoffgranulat räumlich getrennt oder an gleichem Ort zur gleichen Zeit einem Extruder zugeführt. Der Kunststoff wird im Extruder geschmolzen, die Partikel ggf. im Extruder noch nachgetrocknet und gemeinsam wird das Gemisch aus Faserpartikeln und Kunststoff vermischt und durch eine Form, das Werkzeug, zu einem Profil extrudiert/gepresst. Einstufenprozesse benötigen spezielle Extruder, wie z.B. konische, gegenläufige Doppelschneckenextruder, wie sie z.B. von der Firma Cincinnati, Wien , angeboten und z.B. von der Strandex Corporation eingesetzt werden (US 5,516,472), die die Aufgabe des Mischens und Extrudierens gleichzeitig erfüllen können.

Im Zweistufenprozess werden die Aufgaben des Mischens, ggf. inklusive des Trocknens sowie die des Kompaktierens in einem Aggregat (US 5746958, Trex Company) und die Aufgabe des Extrudierens durch ein Werkzeug mit einem anderen Aggregat durchgeführt. Dies kann in direkter Kopplung oder aber räumlich und zeitlich getrennt geschehen. Unter Kompaktieren ist dabei die Verbindung von Holz und Kunststoff zu verstehen. Zum Mischen und Kompaktieren werden entweder gleichlaufende, parallele Doppelschneckenextruder, so genannte Compounder (EP 140 448 B1 , Haller Formholz), Heiz-Kühl-Mischer (US 5,725,939, EIN Engeneering Co., Ltd.) oder Pelletierpressen, z.B. Palltruder von der Firma Pallmann eingesetzt.

Compounder arbeiten kontinuierlich, erzeugen eine homogene Mischung, können aber in der Regel nicht genügend Druck für eine Profilextrusion aufbauen. Heiz-Kühl-Mischer arbeiten diskontinuierlich und funktional sequentiell. In Pelletierpressen werden Faserpartikel und Kunststoffpartikel unter Druck miteinander kompaktiert.

Die mit den drei dargestellten Verfahren erzeugten WPC-Zwischenprodukte können als Rohstoff für die Profilextrusion, für den Spritzguss oder zum Pressen von Platten eingesetzt werden. Da es beim Spritzguss auf sehr gute Homogenität des Materials ankommt, damit auch alle Teile der Schmelze eine gute Fließfähigkeit aufweisen, kommen als WPC-Zwischenprodukte eigentlich nur Pellets aus Compoundern in Frage.

Dem Compounder und der Pelletierpresse ist gemeinsam, dass sie hohe Drücke von mehr als 50 bar auf das Compound ausüben und zu einer starken Vorverdichtung der Holzmatrix führen. Allen drei Verfahren ist eine relativ lange thermische Behandlung der Materialien eigen, die nur ein kleines Prozessfenster offen lässt, bevor die Holzmatrix thermisch verändert wird.

Bei bekannten Verfahren zur Herstellung von WPC-Produkten wird der Faseranteil und der Kunststoff oder das WPC-Vorprodukt in einem Profilextruder oder in einem Spritzgussextruder intensiv mit hohem Energieaufwand durch Friktionswärme der Kunststoffanteil plastifiziert.

Nach dem Plastifizieren wird die Extrusionsmasse unter hohem Druck im Profilextrusionsprozeß durch ein formgebendes Werkzeug und im Spritzgußprozeß in ein formgebendes Werkzeug gepreßt. Die dabei verwendeten Drücke betragen ca. 100 bis 2000 bar.

Ein Nachteil dieser hohen Drücke besteht darin, daß die Holzkomponente, die bei ursprünglichem, unverdichtetem Nadelholz eine Dichte von ca. 400 bis 550 kg/m³ aufweist, stark verdichtet wird, so daß die Fertigprodukte der Holz- und/oder Naturfaser Kunststoff-Verbundwerkstoffe Dichten von 950 bis zu 1400 kg/m³ aufweisen. Sie entsprechen damit in ihrer Dichte den schwersten tropischen Harthölzern. Die Dichte des Kunststoffanteils liegt dabei bei ca. 900 bis ca. 1000 kg/m³. Die hohe Dichte dieser Verbundwerkstoffe führt als Nachteil wiederum zu einem erhöhten Materialverbrauch, einem hohen Gewicht und einer schlechten Wärmedämmung.

Der Erfindung liegt daher die Aufgabe zugrunde, aus groben und/oder feinen Naturstoffpartikeln und Kunststoffpartikeln möglichst gering verdichtete, mindestens teilweise mit Kunststoff beschichtete Feinpartikel bereitzustellen, die in bekannten Verfahren wie Profilextrusion, Spritzguss oder Plattenpresstechnik zu Produkten umgesetzt werden können. Der Erfindung liegt ferner die Aufgabe zugrunde, einen Naturstoff - Kunststoff-Formkörper, sowie ein Verfahren zur Herstellung eines Naturstoff-Kunststoff-Formkörpers aus dem vorbeschriebenen Werkstoff bereitzustellen.

Kennzeichnend für das Verfahren zur Herstellung kunststoffbeschichteter Naturstoff-Feinpartikel ist das Mischen und ggf. Mahlen der Naturstoffpartikel mit Kunststoffpartikeln in einem Gasstrom, wobei die Naturstoff-Partikel mindestens abschnittsweise mit Kunststoff beschichtet werden.

Nach einer vorteilhaften Ausführungsform wird das erfindungsgemäße Verfahren bei Unterdruck, bevorzugt bei 15 mbar bis 60 mbar, maximal bei Umgebungsdruck durchgeführt. Die zu mahlenden und zu beschichtenden Partikel werden durch eine dem Mahl- bzw. Mischgerät nachgeordnete Saugvorrichtung, vorzugsweise einem Ventilator, angesaugt. Sie passieren das der Saugvorrichtung vorgeschaltete Mahl- bzw. Mischgerät in der Regel in maximal einer Sekunde, üblicherweise in Bruckteilen von Sekunden. Das Mahl- bzw. Mischaggregat kann verschieden ausgestaltet sein, je nach dem ob nur eine Beschichtung der Naturstoffpartikel bzw. Feinpartikel erfolgt oder ob zudem ein Mahlvorgang erforderlich ist. Ist das Misch- bzw. Mahlaggregat mit rauher Oberfläche ausgestaltet, wird die Mahlwirkung erhöht, ist die Oberfläche glatt ausgestaltet, steht das Beschichten im Vordergrund.

Bevorzugt wird das erfindungsgemäße Verfahren bei erhöhten Temperaturen und mit sehr kurzen Prozesszeiten durchgeführt. Aufgrund der kurzen Verweilzeiten im Mahl- bzw. Mischgerät können Temperaturen bis zu 400 °C ohne weiteres akzeptiert werden. Es hat sich dabei als besonders wirtschaftlich herausgestellt, zur Temperaturerhöhung direkt Rauchgase einzusetzen. Das erfindungsgemäße Verfahren ist in einem weiten Temperaturbereich wirtschaftlich durchführbar, welche Temperaturbereiche jeweils für zu beschichtende Partikel und aufzutragende Kunststoffe optimal sind, ist durch einfache Versuche zu ermitteln.

Das erfindungsgemäße Verfahren wird im Gasstrom durchgeführt. Im einfachsten Fall wird Luft als Gas zum Mahlen und Mischen der Rohstoff-Partikel eingesetzt. Je nach Art und Eigenschaft der zu verarbeitenden Rohstoffe oder der zu erzeugenden Feinpartikel können aber auch andere Gase eingesetzt werden, insbesondere Inertgase oder Rauchgase. Letztere sind vor allem dann geeignet, wenn das Mahlgut -wie vorstehend beschrieben- während des Mahlens, Mischens und Kompaktierens erhitzt werden soll.

Zur Durchführung des Mischens und Kompaktierens hat sich überraschenderweise ein Verfahren und eine Vorrichtung als geeignet herausgestellt, die bisher nicht zum Mischen und Kompaktieren verwendet wurde. Dies sind Verfahren, die unter Einsatz eines Gasstroms arbeiten. Mahlverfahren bei denen das Mahlgut vornehmlich durch Partikelstoß in Gegenwart hoher Luftmengen aufgemahlen werden sind als Luftstrahlmühlen und Luftwirbelmühlen bekannt. Zur Durchführung der Erfindung wird die Erkenntnis genutzt, dass Mahlverfahren bei denen mehrere Komponenten gleichzeitig vermahlen werden, gleichzeitig eine Mischung der Mahlprodukte erzeugen. Die Mischung erfolgt schnell und gleichmäßig. Nach DE 196 11 112 C2 (Altenburger Maschinefabrik Jäckering GmbH) in welchem anorganische Substanzen mit hohem Feuchtegehalt gemahlen und getrocknet werden, beträgt beispielsweise die Verweildauer des Mahlgutes in einer Luftwirbelmühle nur wenige Millisekunden, maximal bis zu einer Sekunde.

Im Zusammenhang mit der Durchführung des erfindungsgemäßen Verfahrens ist es überraschend und vorteilhaft, dass das Mischen im Gasstrom, das ggf. auch zum Mahlen der Partikel genutzt werden kann, sich hier in einem Arbeitsgang mit dem Beschichten bzw. Kompaktieren verbinden lässt.

Die Naturstoff-Feinpartikel werden mindestens abschnittsweise mit Kunststoff beschichtet, können aber auch insgesamt mit Kunststoff überzogen werden. Das Ausmaß der Beschichtung kann zum einen durch die Art und den Anteil des jeweils zugegebenen Naturstoffs und des Kunststoffs vorgegeben werden. Zum anderen können aber auch Parameter wie Temperatur, Mahl- bzw. Mischeinstellung im Mahlaggregat z. B. zur Intensität der Verwirbelung der Rohstoff-Partikel das Ausmaß der Beschichtung beeinflussen. Entscheidend ist, dass Feinstoffpartikel erzeugt werden, die bei der späteren Verarbeitung eine homogene Verarbeitung ermöglichen.

Beim vorliegenden Verfahren können vorteilhaft rohstoffseitig grobe Partikel aus Naturstoffen, wie z.B. preiswerte Holzhackschnitzel oder Holzbrennstoffpellets mit einer Länge bis zu 100 mm, bevorzugt bis zu 50 mm eingesetzt. Dabei wird als Länge die jeweils längste Abmessung des groben Partikels bezeichnet, unabhängig davon, ob es sich um die Länge, die Breite, die Höhe oder den Durchmesser des Partikels handelt. Geeignet sind mittelfeine Späne, wie z.B. preiswerte unsortierte Sägespäne, die üblicherweise eine Länge von bis zu ca. 4 mm, eine Breite zwischen 2 und 5 mm sowie eine Dicke von ca. 1 bis 1,5 mm aufweisen oder Samenschalen, insbesondere Getreideschalen wie z. B. Reisschalen oder Kleie, aber auch aufbereitete, teurere ausgesiebte Feinspäne, z.B. im Korngrößenbereich von 400 - 800 µm eingesetzt werden. Besonders geeignet sind Holzpartikel, u. a. wegen der faserförmigen Struktur. Auch die vorgenannten Samenschalen oder andere Naturstoffe mit hohem Fasergehalt sind sehr geeignet. Es können aber auch faserarme oder -freie Naturstoffe (Nussschalen, Rinde) oder Mischungen von faserhaltigen und faserarmen oder -freien Naturstoffen eingesetzt werden, sofern der Verwendungszweck der beschichteten Feinpartikel dies zulässt oder fordert. Auf der Kunststoffseite kann beliebig von Pellets, Pastillen, Granulat bis zu Pulver jede Partikelgröße kleiner 30 mm Durchmesser eingesetzt werden.

Die nach dem erfindungsgemäßen Verfahren erzeugten, mindestens abschnittsweise mit Kunststoff beschichteten Feinpartikel weisen einen Durchmesser von 50 µm bis 3.000 µm, vorzugsweise von 100 µm bis 500 µm auf. Je nach Verwendungszweck sind sie im Mittel kleiner als o,8 mm, bevorzugt kleiner 0,5 mm, besonders bevorzugt kleiner 0,3 mm. In der Regel ist für die spätere Verarbeitung ein verhältnismäßig enges Größenspektrum erwünscht, damit möglichst homogene Formkörper hergestellt werden können. Dieser Anforderung wird das erfindungsgemäße Verfahren zur Herstellung von Feinpartikeln in besonderer Weise gerecht.

Besonders bevorzugt ist es, dass die mindestens abschnittsweise mit Kunststoff beschichteten Feinpartikel nur einen geringen Anteil grober Feinpartikel aufweisen. Bei dieser Ausführungsform beträgt der Anteil der Partikelfunktion, der im Mittel 0,6 mm oder größer ist, maximal 10 Gewichts-% bezogen auf das Gesamtgewicht aller Partikel. Mindestens 90 Gewichts-% der Feinpartikel weisen also für die weitere Verwendung erwünschte bzw. vorgegebene Abmessungen auf.

Das erfindungsgemäße Verfahren ermöglicht die Verarbeitung von Naturstoffen mit einem Feuchtegehalt von bis zu 100% bezogen auf den ofentrockenen Naturstoff. Materialfeuchten bis 100% sind insbesondere dann verarbeitbar, wenn die Zuluft der Mühle vorgeheizt wird. Gaseingangstemperaturen von 300°C bis 400°C sind keine Seltenheit (DE 196 11 112 C2). Trotz der hohen Eingangstemperaturen wird durch die Verdunstung der Feuchtigkeit aus den Rohstoffpartikeln die Temperatur im Mahlraum drastisch gesenkt, so daß die Temperaturen der mindestens abschnittsweise beschichtete Feinpartikel beim Verlassen der Mühle, je nach Betriebsweise, bei 75°C bis 150°C liegen.

Die Herstellung von mindestens abschnittsweise beschichteten Naturstoff-Feinpartikeln durch Mischen, ggf. Zerkleinern und Kompaktieren von Naturstoff- und KunststoffPartikeln in einem Gasstrom, z. B. einer Luftwirbelmühle unterscheidet sich wesentlich vom Stand der Technik, bei dem Compounder, Heiz-Kühlmischer oder Pelletierpressen eingesetzt werden. Zum einen findet der Prozess des Mahlens, des Mischens, des Trocknens und des Beschichtens der Naturstoffpartikel mit Kunststoff gleichzeitig statt und nicht sequentiell (erst Trocknen und Mischen oder erst Mischen und dann Trocknen, dann Schmelzen). Es findet auch keine Verdichtung der Materialien durch Anwendung hoher Drücke beim Mischen und/oder Beschichten statt. Eine thermische Schädigung bleibt aus, weil die Prozessdauer in der Regel nur wenige Millisekunden beträgt. Die beschichteten Feinpartikel bilden keine Aggregate, die, wie beim Heiz-Kühlmischer wieder aufgebrochen werden müssen. Eine Besonderheit des Verfahrens liegt darin, dass gemäß einer bevorzugten Ausführungsform durch den Mahl- und Mischvorgang die Korngrößenverteilung gezielt vergleichmäßigt werden kann. Werden z. B. als Ausgangsstoffe Holzfasern und Polyethylenpulver genommen, die jeder für sich ein ausgeprägtes Verteilungsmaximum aufweisen, so sind diese Maxima nach dem Verfahrensschritt des Mischens und Beschichtens verschwunden. Dies gilt sowohl für Mischungen mit hohem Kunststoffanteil als auch für solche mit geringem Kunststoffanteil.

Zur Durchführung des erfindungsgemäßen Verfahrens können zahlreiche Kunststoffe eingesetzt werden. Bevorzugt werden Thermoplaste eingesetzt, die sich unter den einfach einstellbaren Temperaturverhältnissen während des Zerkleinerns und des Mischens sowie Kompaktierens gut zum mindestens abschnittsweisen Beschichten der Oberfläche von Feinpartikeln eignen. Insbesondere Polyethylen, Polypropylen, Polystyrol oder deren Copolymere sind geeignet.

Je nach den Anforderungen an die beschichteten Feinpartikel können aber auch Duroplaste eingesetzt werden.

Es wird erfindungsgemäß bevorzugt, wenn der Kunststoff zur Durchführung des Verfahrens in Form von Partikeln eingesetzt wird, deren Durchmesser geringer ist als der Durchmesser der Naturstoffpartikel.

Zur Durchführung des erfindungsgemäßen Verfahrens wird bevorzugt, daß die eingesetzten Naturstoffpartikel und/oder die Kunststoffpartikel mit Additiven, insbesondere Kopplungsagentien und/oder Gleitmitteln vermischt werden, um gewünschte Eigenschaften für die mindestens abschnittsweise beschichteten Feinpartikel einzustellen.

Die Dichte der erfindungsgemäßen, mindestens abschnittsweise mit Kunststoff beschichteten Naturstoffpartikel kann durch Auswahl des Naturstoffs sowie des Kunststoffs innerhalb einer weiten Bandbreite eingestellt werden. Häufig soll jedoch die Dichte besonders gering liegen, z. B. um leichte, gut isolierende Eigenschaften der Feinpartikel und/oder der daraus hergestellten Produkte zu erreichen. Daher weisen Feinpartikel erfindungsgemäß eine Dichte von weniger als 600 kg/m³, bevorzugt von weniger als 500 kg/m³ auf. Feinpartikel einer so geringen Dichte können mit Verfahren, die aus dem Stand der Technik geläufig sind, nicht hergestellt werden.

Das Größenspektrum der erfindungsgemäßen Naturstoffpartikel bzw. Feinpartikel kann innerhalb eines weiten Bereichs eingestellt werden. Wie vorstehend bereits erläutert, kann der Durchmesser von 50 µm bis 3000 µm reichen, wobei sämtliche Dimensionen dazwischen durch einfache Anpassung der Verfahrensparameter hergestellt werden können. Dabei können nach einer weiter bevorzugten Ausführungsform der Erfindung Feinpartikel hergestellt werden, deren Abmessungen weitaus homogener sind als es die Abmessungen der eingesetzten Rohstoffe vermuten lassen. Nach einer bevorzugten Ausführung weist eine Menge an Feinpartikeln mindestens 60 Gewichts-%, bevorzugt mindestens 90 Gewichts-% Anteil an Feinpartikeln vorgegebener Abmessungen auf.

Der Anteil von Naturstoff und Kunststoff kann im Rahmen der Erfindung bei den mindestens abschnittsweise kunststoffbeschichteten Naturstoffpartikeln in einem weiten Rahmen variiert werden. Der Anteil an Kunststoff beträgt mindestens 3 Gewichts-% und kann auf maximal 97 Gewichts-% gesteigert werden. Bevorzugt liegt der Anteil des Kunststoffs zwischen 15 Gewichts-% und 85 Gewichts-%.

Überraschender Weise hat sich herausgestellt, dass die mindestens abschnittsweise kunststoffbeschichteten Naturstoffpartikel physikalische Eigenschaften aufweisen, die von den Eigenschaften der jeweiligen Rohstoffe, die zur Herstellung eingesetzt wurden, abweichen. Insbesondere das Ad- bzw. Absorptionsvermögen der Feinpartikel in Bezug auf verschiedene Flüssigkeiten ist überraschend selektiv. Der ursprünglich eher hydrophile Naturstoff weist als mindestens abschnittsweise kunststoffbeschichteter Feinpartikel deutlich lipophile Eigenschaften auf. Diese selektiven Ad- bzw. Absorptionseigenschaften liegen bereits bei den pulverförmigen Feinpartikeln vor. Sie bleiben aber erhalten, wenn aus den Feinpartikeln Formkörper hergestellt werden, so wie nachstehend erläutert. Diese selektiven Ad- bzw. Absorptionseigenschaften ermöglichen die Verwendung der erfindungsgemäßen Feinpartikel als Filter oder als Absorbens bzw. Adsorbens. Dabei können pulverförmige Feinpartikel unmittelbar nach Art eines Bindemittels eingesetzt werden. Die Feinpartikel können aber auch in einer Trägervorrichtung, ggf. nach Verdichtung als Filter eingesetzt werden. Alternativ können Filter hergestellt werden, indem die pulverförmigen Feinpartikel wie nachstehend beschrieben zu Formkörpern geformt werden. Die Leistungseigenschaften des jeweiligen Filters können beispielsweise durch Auswahl und Mischung von Rohstoffen oder durch die Wahl von Dichte und Porosität des Formkörpers in einem weiten Bereich eingestellt werden.

Es wird als eigenständige erfinderische Leistung angesehen, die pulverförmigen Feinpartikel als Filter einzusetzen und/oder Filterkörper aus dem erfindungsgemäßen Werkstoff herzustellen.

Zur Herstellung von Naturstoff-Kunststoff-Formkörpern unter Verwendung der eingangs beschriebenen, mindestens abschnittsweise kunststoffbeschichteten Naturstoffpartikel können grundsätzlich alle herkömmlichen formgebenden Verfahren verwendet werden, bei denen die Kunststoffkomponenten angeschmolzen werden, so daß eine Verbindung der Feinpartikel untereinander erfolgen kann. Bei Verfahren, die aus dem Stand der Technik bekannt sind, erfolgt regelmäßig eine Verdichtung bzw. eine weitere Verdichtung der Feinpartikel.

Das erfindungsgemäße Verfahren zur Herstellung eines Naturstoff-Kunststoff-Formkörpers ist dadurch gekennzeichnet, daß mindestens abschnittsweise kunststoffbeschichtete Naturstoffpartikel einer Formgebungseinheit zugeführt werden, in der diese anschließend ohne zusätzliche Verdichtung zu einem Formkörper geformt werden.

Da die Feinpartikel bereits eine innige Verbindung aus Holz und Kunststoff darstellen, kann erfindungsgemäß auf eine weitere Homogenisierung durch einen Extuder verzichtet werden, so daß die in der Regel unerwünschte, bisher aber unvermeidbare Verdichtung des Materials während der Verarbeitung entfällt. Somit weist auch der Formkörper vorzugsweise die geringe Dichte der kunststoffbeschichteten Holzpartikel auf. Er ist besonders leicht und weist die guten isolierenden Eigenschaften des Granulats auf.

Nach einer vorteilhaften Weiterbildung der Erfindung werden zuerst die mindestens abschnittsweise kunststoffbeschichteten Naturstoffpartikel in eine Formgebungseinheit gegeben, deren Kontur dem herzustellenden Körper entspricht. Anschließend wird die Formgebungseinheit aufgeheizt und bewegt. Die Bewegung, insbesondere komplexe Taumelbewegungen um vorgegebene Rotationsachsen, bewirkt zunächst, daß die Feinpartikel über die aufgeheizte Innenwand hinweg gleiten, Wärme aufnehmen, der Kunststoff erweicht oder schmilzt und die ursprünglich vereinzelten Feinpartikel sich zu einer überwiegend homogenen, die Innenfläche überziehenden Schicht verbinden. Dieser Prozess schreitet von der Außenwand der Formgebungseinheit in das Innere der Form fort. Dadurch ist eine gleichmäßige Überführung der Feinpartikel in einen festen Körper gewährleistet. Für reine Kunststoffpulver ist ein ähnliches Verfahren als Rotationssinterverfahren bekannt.

Das derart weitergebildete, erfindungsgemäße Verfahren gewährleistet in besonders hohem Maße die Herstellung eines Verbundkörpers mit einer gleichmäßigen Dicke in allen Bereichen des Formkörpers. Insbesondere die fehlende Verdichtung der Faserfeinpartikel während der Herstellung gewährleistet dabei, daß sich die positiven Eigenschaften der Feinpartikel beim Formkörper wiederfinden.

Kennzeichnend für den Naturstoff-Kunststoff-Formkörper ist die Verwendung von mindestens abschnittsweise kunststoffbeschichteten Feinpartikeln zu dessen Herstellung und eine Dichte des Formkörpers von weniger als 600 kg/m³, bevorzugt weniger als 500 kg/m³. Ein derartiger Naturstoff-Kunststoff-Formkörper zeichnet sich dabei durch seine geringe Dichte, seinen geringen Materialverbrauch sowie durch seine hohe Wärmedämmung aus. Besonders hervorzuheben ist der geringe Wärmeausdehnungskoeffizient des Naturstoff-Kunststoff-Formkörpers im Vergleich zum reinen Kunststoff. Selbst wenn der Kunststoffanteil 85% (w/w) beträgt, ist der Wärmeausdehnungskoeffizient nur ca. ein Drittel so hoch wie der des reinen Kunststoffs (Tabelle 2).

Überraschenderweise wird durch das Rotationssinterverfahren -anders als bei der Verarbeitung von reinem Kunststoff - eine Porosität in dem erfindungsgemäßen Formkörper erzeugt, die die Dichte reduziert und damit Material einspart. Dies bedeutet, dass eine vorgegebene Form mit geringerem Materialeinsatz hergestellt werden kann als bisher. Bei einem Mischungsverhältnis von 2:1 Polyethylen (PE) : Holz und jeweils einer Dichte von 0,94 g/cm³ für PE und 0,45 g/cm³ für Fichtenholz müsste sich rechnerisch eine mittlere Dichte des Formkörpers von 0,77 g/cm³ ergeben. Im Versuch wurde hingegen für das fertige WPC-Produkt eine durchschnittliche Dichte von 0,47 g/cm³ gemessen.

Nach einer Weiterbildung der Erfindung nimmt die Dichte des Holz-Kunststoff-Formkörpers zur Innenseite hin ab. Der in Tabelle 3 dargestellte Holz-Kunststoff-Formkörper weist einen Dichtegradienten, der von der der Rotationsachse zugewandten Seite ( innen) zu der der Rotationsachse abgewandten Seite (außen) steigt (Tabelle 3).

Die Innenseite des Formkörpers weist dabei nach einer Weiterbildung der Erfindung neben einer geringeren Dichte auch eine poröse Struktur auf. Diese führt zu einem geringen Gewicht des Formkörpers und kann nach einer weiteren Ausgestaltung der Erfindung dazu verwendet werden, den Formkörper nachträglich mit Zusatzstoffen, insbesondere mit Flamm- und Brandschutzmitteln, Düngemitteln, Bioziden, Geruchsstoffen oder dergleichen auszurüsten, wodurch die Eigenschaften des Formkörpers gezielt und anwendungsorientiert beeinflußt werden können.

### Ausführungsbeispiel i

Beispielhaft für das erfindungsgemäße Verfahren und zur Beschreibung erfindungsgemäßer kunststoffbeschichteter Naturstoffpartikel sind in Tabelle 1 die Korngrößenverteilungen von Holzspänen und Polyethylenpulver vor der Vermahlung sowie Holz-Polyethylen-Feinpartikel nach der Vermahlung dargestellt wobei die zwei Mischungsverhältnisse Holz/PE von 85/15 und 30/70 in Tabelle 1 und Abbildung 1 dargestellt sind. Die Partikelverteilung ist sehr homogen, das Fertigprodukt liegt als rieselfähiges feines Pulver vor, eine Sichtung bzw. Siebung ist nicht notwendig. Unerwarteter Weise können durch den Prozess sogar die Korngrößenverteilungen, die im Ausgangsprodukt sehr ungleichmäßig sein können, im Endprodukt vereinheitlicht werden (Tabelle 1).

Tabelle 1 zeigt die Korngrößenverteilungen in [%] von PE-Pulver, Holzspänen als Ausgangsmaterialien und kunststoffbeschichteten Holz-PE-Feinpartikeln nach gleichzeitiger Behandlung der Ausgangsstoffe in einer Luftwirbelmühle. Die durchschnittliche Partikelgröße für Holz/PE 85/15 (85 Gewichts-%: 15 Gewichts-% Polyethylen) liegt unter 0,15 mm und die von Holz/PE 30/70 unter 0,20 mm, die der Holzspäne zwischen 0,3 und o,6 mm mit einer größeren Fraktion, die Abmessungen von unter 0,09 mm aufweist. Die Korngrößenverteilung des PE-Pulvers ist breit gestreut, sowohl Körner mit einem 0 von unter 0,9 mm als auch von über 0,5 mm kommen vor, nahezu die Hälfte des PE-Pulvers ist den Kornstufen 0,3-0,5 mm zuzuordnen. Holzspäne, die zwei ausgeprägte Korngrößen aufweisen (ca. 30%<0,09 mm und ca. 60% >0,3mm) werden in Folge des Mischens und mindestens abschnittsweisen Beschichtung mit Kunststoff derart in ihrer durchschnittlichen Größe verändert, das mehr als 60% der Feinpartikel eine Größe von <0,2 mm aufweisen.

Bei der Verarbeitung der in Tab. 1 gezeigten Holzspäne zu beschichteten Feinpartikeln betrug die Holzfeuchte vor der Verarbeitung durchschnittlich 7 % bezogen auf den ofentrockenen Naturstoff, hier Holz. Nach der Verarbeitung betrug die Feuchte der mindestens abschnittsweise beschichteten Feinpartikel durchschnittlich 1 % bezogen auf das ofentrockene Holz.

### Ausführungsbeispiel 2

Nachstehend wird nur ein mögliches Beispiel für die vorteilhafte Filterwirkung der erfindungsgemäßen Feinpartikel genannt:

So nimmt z. B. das Wandmaterial eines Holz-Kunststoff-Formkörpers, das nach dem Rotationssinterverfahren mit 75% Gewichts-% (w/w) PE und 25% (w/w) Holzanteil hergestellt ist, Wasser zu 4,8 % (w/w), bezogen auf das Wandmaterial, auf. Öl hingegen wird zu 103% (w/w) ad- oder absorbiert.

**Tabelle 1**

| Korngrößenverteilungen in [%] von PE-Pulver, Holzspänen als Ausgangsmaterialien und kunststoffbeschichteten Holz-PE-Feinpartikeln nach gleichzeitiger Behandlung der Ausgangsstoffe im Gasstrom. | | | | |
|---|---|---|---|---|
| Kornstufen [mm] | Holz/P E 85/15 | Holz/P E 30/70 | Holzspan | PE |
| < 0,090 | 37,0 | 18,1 | 29,2 | 10,2 |
| 0,090 - 0,150 | 26,4 | 23,9 | 0,6 | 10,2 |
| 0,150 - 0,212 | 17,5 | 21,3 | 2,1 | 13,2 |
| 0,212 - 0,300 | 7,8 | 13,5 | 7,3 | 18,8 |
| 0,300 - 0,425 | 3,6 | 12,1 | 26,7 | 29,8 |
| 0,425 - 0,500 | 2,9 | 3,1 | 18,6 | 13,1 |
| 0,500 - 0,600 | 2,9 | 2,6 | 12,6 | 4,7 |
| > 0,600 | 2,0 | 5,5 | 3,0 | 0,0 |

**Tabelle 2**

| Wärmeausdehnungskoeffizienten bei 35 °C bis 55 °C von Polyethylen und Holz-Kunststoff-Komposit (WPC) nach dem Rotationsverfahren mit unterschiedlich hohen Kunststoffanteilen. | | | |
|---|---|---|---|
| Wärmeausdehnungskoeffizient [10⁻⁶/K⁻¹] | Polyethylen 100% | WPC 75/25 PE/Holz | WPC 85/15 PE/Holz |
| bei 35 °C | 350 | 90 | 135 |
| bei 45 °C | 500 | 110 | 160 |
| bei 55 °C | 700 | 140 | 180 |

**Tabelle 3**

| Dichte und Dichteverteilung von Holz-Kunststoff-Composit (WPC)-Wandmaterial aus Formkörpern, die im Rotationssintergussverfahren hergestellt wurden. | | |
|---|---|---|
| Dichte [g/cm³] | Polyethylen 100 % | WPC 2/1 PE/Holz |
| durchschnittlich | 0,94 | 0,47 |
| außen | 0,94 | 0,49 |
| mitte | 0,94 | 0,48 |
| innen | 0,94 | 0,45 |

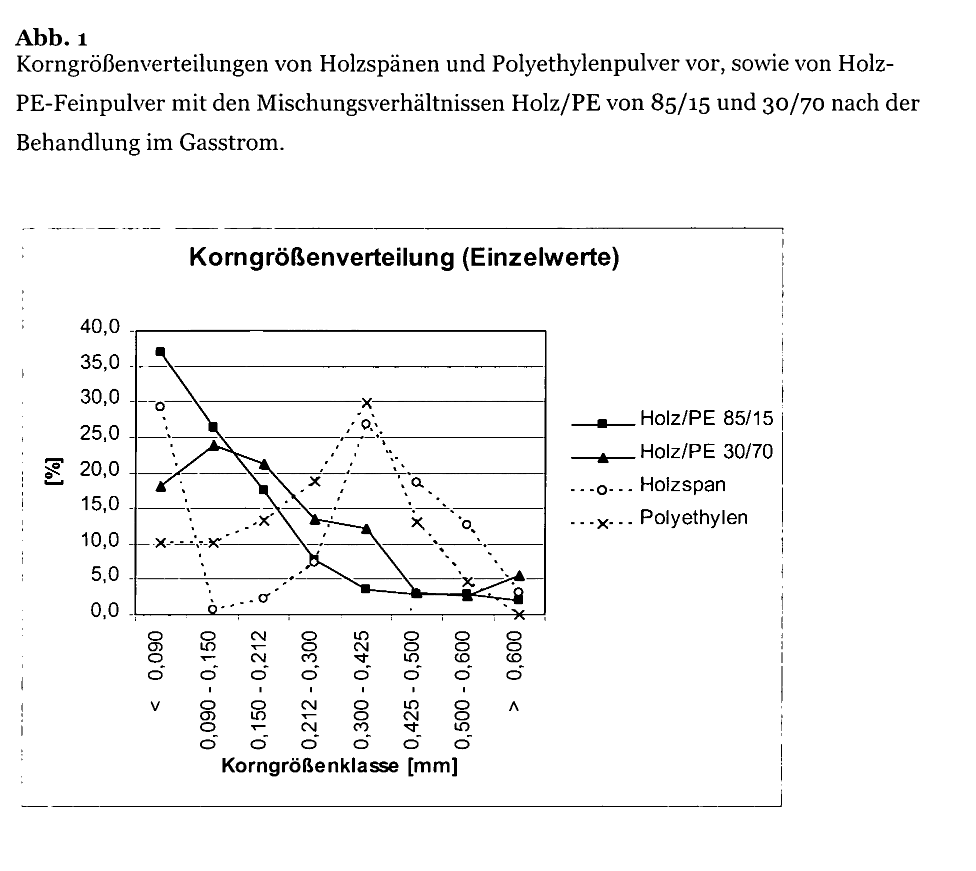

## Patentansprüche

1. Verfahren zur Herstellung mindestens abschnittsweise kunststoffbeschichteter Naturstoffpartikel, mit den Schritten
- Mischen und ggf. Mahlen von Naturstoffpartikeln mit Kunststoffpartikeln in einem Gasstrom
- mindestens abschnittsweises Beschichten der Naturstoffpartikel mit Kunststoff.

2. Verfahren nach Anspruch 1, **dadurch gekennzeichnet, dass** Naturstoffpartikel mit einer maximalen Länge von bis zu 100 mm, vorzugsweise von bis zu 50 mm eingesetzt werden.

3. Verfahren nach Anspruch 1, **dadurch gekennzeichnet, dass** als Naturstoffpartikel als Rohstoff eingesetzt werden, deren Feuchtegehalt bis zu 100 Gewichts-% bezogen auf den ofentrockenen Naturstoff beträgt.

4. Verfahren nach mindestens einem Anspruch 1 bis 3, **dadurch gekennzeichnet, dass** als Naturstoff Faserstoffe insbesondere Holz, Samenschalen, insbesondere Reisschalen, Getreideschalen oder Kleie oder Stoffe mit geringem oder keinem Fasergehalt, insbesondere Rinde oder Nussschalen oder Mischungen aus faserhaltigen, faserarmen und/oder faserfreien Naturstoffen zur Herstellung der kunststoffbeschichteten Naturstoffpartikel eingesetzt werden.

5. Verfahren nach Anspruch 1, **dadurch gekennzeichnet, dass** das Verfahren zum Herstellen mindestens abschnittsweise beschichteter Naturstoffpartikel bei Temperaturen von bis zu 400 °C durchgeführt wird.

6. Verfahren nach Anspruch 1, **dadurch gekennzeichnet, dass** das Verfahren zum Herstellen mindestens abschnittsweise beschichteter Naturstoffpartikel bei Unterdruck, bevorzugt von 15 mbar Unterdruck bis zu 60 mbar Unterdruck, oder bei Umgebungsdruck durchgeführt wird.

7. Verfahren nach Anspruch 1, **dadurch gekennzeichnet, dass** das Verfahren zum Herstellen mindestens abschnittsweise beschichteter Naturstoffpartikel für das Mischen, ggf. Mahlen und Beschichten der Naturstoffpartikel bis zu 1 Sekunde Reaktionszeit erfordert.

8. Verfahren nach Anspruch 1, **dadurch gekennzeichnet, dass** der zur Durchführung des Verfahrens zum Herstellen mindestens abschnittsweise beschichteter Naturstoffpartikel erforderliche Gasstrom durch Einsatz einer Luftwirbelmühle in Verbindung mit einer Saugvorrichtung, insbesondere einem Ventilator erzeugt wird.

9. Verfahren nach Anspruch 1, **dadurch gekennzeichnet, dass** das Verfahren zum Herstellen mindestens abschnittsweise beschichteter Naturstoffpartikel unter Einsatz von Thermoplasten oder Duroplasten oder deren Copolymeren, bevorzugt unter Einsatz von Polyethylen, Polypropylen und/oder Polystyrol oder deren Copolymeren durchgeführt wird.

10. Verfahren nach Anspruch 1, 2 oder 9, **dadurch gekennzeichnet, daß** die Größe der zur Durchführung des Verfahrens verwendeten Kunststoffpartikel vorzugsweise kleiner ist als die zu beschichtenden Naturstoffpartikel.

11. Verfahren nach einem oder mehreren der vorhergehenden Ansprüche, **dadurch gekennzeichnet, daß** die zur Durchführung des Verfahrens eingesetzten Naturstoffpartikel und/oder die Kunststoffpartikel mit Additiven, insbesondere Kopplungsagentien und/oder Gleitmitteln vermischt werden.

12. Kunststoffbeschichtete Naturstoffpartikel, insbesondere hergestellt nach einem Verfahren gemäß einem oder mehreren der Ansprüche 1-11, **dadurch gekennzeichnet, daß** die Naturstoffpartikel mindestens abschnittsweise von einem Kunststoff umhüllt sind und eine Dichte von weniger als 600 kg/m³, bevorzugt weniger als 500 kg/m³ aufweisen.

13. Kunststoffbeschichtete Naturstoffpartikel nach Anspruch 12, **dadurch gekennzeichnet, daß** diese einen Durchmesser von 50 bis 3000 µm, vorzugsweise 100 bis 500 µm aufweisen, vorteilhaft weisen sie einen Durchmesser von weniger als 800 µm, besonders vorteilhaft von weniger als 500 µm, bevorzugt von weniger als 300 µm auf.

14. Kunststoffbeschichtete Naturstoffpartikel nach Anspruch 1, **dadurch gekennzeichnet, dass** der Anteil von Naturstoffpartikeln, der vorgegebene Abmessungen einhält, größer als 60 Gewichts-%, vorzugsweise größer als 90 Gewichts-% ist.

15. Kunststoffbeschichtete Naturstoffpartikel nach Anspruch 1, **dadurch gekennzeichnet, dass** der Anteil des Kunststoffs mindestens 3 Gewichts-% bis maximal 97 Gewichts-%, bevorzugt zwischen 15 Gewichts-% und 85 Gewichts-% beträgt.

16. Verfahren zur Herstellung eines Holz-Kunststoff-Formkörpers, **dadurch gekennzeichnet, daß** kunststoffbeschichtete Holzpartikel, insbesondere solche gemäß mindestens einem der Ansprüche 12 bis 15, einer Formgebungseinheit zugeführt werden, in der diese anschließend zu einem Formkörper geformt werden, wobei eine maximale Verdichtung von bis zu 170 % bezogen auf 500 kg/m³ erfolgt, vorzugsweise aber keine Verdichtung erfolgt.

17. Verfahren nach Anspruch 16, **dadurch gekennzeichnet, daß** eine Formgebungseinheit mindestens zum Teil mit mindestens abschnittsweise kunststoffbeschichteten Naturstoffpartikeln gefüllt wird, worauf die Formgebungseinheit anschließend aufgeheizt und bewegt, insbesondere derart bewegt wird, daß sie mit Taumelbewegungen um mindestens eine Rotationsachse rotiert.

18. Holz-Kunststoff-Formkörper, insbesondere hergestellt nach Anspruch 16 oder 17, **dadurch gekennzeichnet, daß** er unter Verwendung von kunststoffbeschichteten Holzpartikeln hergestellt ist und eine Dichte von weniger als 600 kg/m³, bevorzugt weniger als 500 kg/m³ aufweist.

19. Holz-Kunststoff-Formkörper nach Anspruch 18, **dadurch gekennzeichnet, daß** die Dichte des Formkörpers von der Innenseite, die der mindestens einen Rotationsachse zugewandt ist, zu der Außenseite, die bezogen auf die mindestens eine Rotationsachse, außen liegt, hin ansteigt.

20. Holz-Kunststoff-Formkörper nach Anspruch 17 oder 18, **dadurch gekennzeichnet, daß** die Innenseite des Formkörpers eine poröse Struktur aufweist.

21. Holz-Kunststoff-Formkörper nach einem oder mehreren der vorhergehenden Ansprüche, **dadurch gekennzeichnet, daß** der Formkörper, insbesondere in einem porösen Bereich, mit Zusatzstoffen, insbesondere Flamm- und Brandschutzmitteln, Düngemitteln, Bioziden, Geruchsstoffen, Verfestigungsmitteln oder dergleichen ausgerüstet ist.

22. Verwendung von mindestens abschnittsweise mit Kunststoff beschichteten Naturstoffpartikeln nach mindestens einem der Ansprüche 12 bis 15 als Filter oder zur Herstellung eines Filterkörpers.

23. Verwendung von mindestens abschnittsweise mit Kunststoff beschichteten Naturstoffpartikeln nach Anspruch 22, **dadurch gekennzeichnet, daß** die mindestens abschnittsweise beschichteten Naturstoffpartikel lose oder als Filterkörper als Filter in Verbindung mit einer Trägervorrichtung eingesetzt werden.

24. Verwendung von mindestens abschnittsweise mit Kunststoff beschichteten Naturstoffpartikeln nach mindestens einem der Ansprüche 22 oder 23 als Filter zur selektiven Trennung oder Adsorption oder Absorption, insbesondere von lipophilen Stoffen aus hydrophiler Umgebung.

25. Verwendung von mindestens abschnittsweise mit Kunststoff beschichteten Naturstoffpartikeln nach mindestens einem der Ansprüche 12 bis 15 als selektives Adsorbens oder Absorbens für lipophile Stoffe in hydrophiler Umgebung.
